# EUROPEAN PATENT APPLICATION

(11) **EP 4 074 961 A1**
(43) Date of publication of application: **19.10.2022**
(21) Application number: 21168329.7
(22) Date of filing: 14.04.2021
(51) Int. Cl.: F03D 9/14, F03D 9/16, F03D 13/25

(54) **UNDERWATER ENERGY STORAGE SYSTEM**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention relates to an underwater energy storage system (1) for an off-shore wind turbine (19), the underwater energy storage system (1) comprising a hollow shaft (6), a generator (13), a motor (2) and a mass (3) attached to the motor (2). The invention further relates to a wind farm (30) comprising the underwater energy storage system (1), whereby the wind farm (30) further comprises at least one wind turbine (19) electrically connected to the motor (2) and at least one grid station (21) electrically connected to the generator (13).

## Description

The invention relates to an underwater energy storage system, a wind farm comprising the system and a method for operating such system.

The storage of energy, in particular electrical energy, is currently achieved by many different principles. Among these principles are storing the electrical energy in mechanical, chemical or heat form. Exemplary technologies of storing energy are batteries, flywheels, supercaps, etc.

With the growing interest in renewable energies, as may be produced by wind turbines, there is still a need for convenient and cost-efficient energy storage systems. That is because renewable energies are a fluctuating source of energy compared to conventional energy sources.

Accordingly, it is an object of the invention to provide a convenient and cost-efficient energy storage system.

This object is solved by the subject-matter of the claims. In particular, the object is solved by an underwater energy storage system according to claim 1, a wind farm according to claim 14 and a method for operating the underwater energy storage system according to claim 15. Further details of the invention unfold from the other claims as well as the description and the drawings. Thereby, the features and details described in connection with the underwater energy storage system of the invention, the wind farm of the invention and the method of the invention may be applied in connection with each other so that regarding the disclosure of the individual aspects of the invention it is or can be referred to one another.

According to a first aspect of the invention, the above object is solved by an underwater energy storage system for an off-shore wind turbine. The underwater energy storage system comprises a hollow shaft, a generator, a motor and a mass attached to the motor. The hollow shaft is supported on a foundation located underwater. The hollow shaft comprises a hollow space for storing water and/or air therein. The motor is configured to lift the mass relative to the foundation by means of operating the motor. The mass is functionally coupled to the hollow shaft such that when the motor is operated, the mass is lifted. The generator is configured to generate energy when the mass is dropped.

Accordingly, the underwater energy storage system provides for a storage system of electrical energy generated by an off-shore wind turbine, which is simple due to the use of the mechanical means - namely the hollow shaft, the generator, motor and the mass -, thereby cost-efficient and also conveniently implementable underwater near the off-shore wind turbine.

Despite the underwater energy storage system (which in the following will also simply be referred to as the system) being suitable for an off-shore wind turbine, it is also alternatively or additionally possible to use the underwater energy storage system in conjunction with other energy generating facilities such as on-shore wind turbines or solar plants, for example. It is also possible to use the underwater energy storage system with several energy generating facilities, i.e., connect several energy generating facilities to the system, in particular the motor. Preferably, the energy generating facility should be an electrical energy generating facility, such as a wind turbine. Such an electrical energy generating facility may be simply electrically connected to the motor, which preferably is an electric motor. It is also possible to use multiple motors, in particular electric motors, in the system and attach them to the mass.

The underwater energy storage system may preferably be used in the sea. The system may be designed to withstand the external conditions of the sea, e.g., contact with sea water, high waves and extreme weather events. For this purpose, large portions of the underwater energy storage system may be positioned underwater as will be explained later. But the system is not limited to the application in the sea. For example, it is also possible to use the system in a lake. However, the lake should have sufficient depth measured from water level to the ground for this purpose.

The stability achieved by means of the construction of the system is one advantage of the system. Another advantage is that the system is built with mechanical means. The system may be dimensioned to achieve any power/energy ratio. The energy content depends on the height of the shaft, the weight and shape of the mass, optionally the flow through the at least one port as mentioned later and the size of the generator. The system has virtually no risk of polluting the environment because no chemicals or the like are involved, as is the case in batteries, for example. Further, the system is particularly well suited for use with a wind turbine, in particular an off-shore wind turbine, because it may use the same electrical infrastructure of the wind turbine or the wind farm in which the wind turbine is located, thereby reducing any additional costs.

An outer shape or cross section of the hollow shaft, i.e., its housing, may be cylindrical. Also, the hollow space inside of the hollow shaft may be cylindrically shaped or provided with a cylindrical cross section. Alternatively, the hollow shaft and hollow space may have any other shape or cross section, e.g., the shape or cross section of a triangle or rectangle. The hollow shaft or, more precisely, its housing may be made from a sea water resistant material. For example, stainless steel or concrete may be used as sea water resistant material. The hollow shaft may extend with its central axis from the ground of the sea to the surface of the water.

Moreover, the mass may be designed cylindrically in its shape or in its cross section. Alternatively, the mass may have any other shape or cross section, e.g., the shape or cross section of a triangle or rectangle.

The mass and the hollow shaft may share a common central axis. In other words, the mass may be positioned such that its central axis matches with the central axis of the hollow shaft. The mass may further be configured to be moved, in particular lowered and lifted, inside of the hollow shaft, thereby enabling the functional coupling of the mass with the hollow shaft. The functional coupling of the mass with the hollow shaft may alternatively or additionally by provided by other or further means, a further example of which will be discussed later.

In particular, the mass may be configured to be dropped or lowered inside and/or out of the hollow shaft and lifted or raised inside and/or out of the hollow shaft. For the movement inside of the hollow shaft, the mass may be sized such that it may be substantially fitted into the hollow shaft. It may then be enabled to glide on the inner walls of the hollow shaft. The mass may also be designed to be sealed against the inner wall of the hollow shaft.

The motor may be supported on a supporting structure. The supporting structure may be supported on the foundation. The supporting structure thereby fixedly positions the motor and the mass attached thereto with respect to the hollow shaft. This is beneficial for the operation of the system because otherwise it may not or only with much more effort be ensured that the mass is positioned as intended with respect to the hollow shaft, in particular with its central axis matching the central axis of the hollow shaft. The supporting structure may constitute a tripod formation, i.e., have three legs oriented oblique to the ground, for example, or have more than three legs. Alternatively, or additionally, the supporting structure may be supported on the hollow shaft.

The mass may be suspended from the motor. A suspension system may be used for this purpose. The suspension system may comprise one or more ropes or cables attached to the motor and the mass.

Alternatively, or additionally, the mass may be coupled to the motor by means of a releasable mechanism, in particular a mechanical clutch. The releasable mechanism or, in other words decoupling mechanism, may release or decouple the mass from the motor to allow the mass to freely drop with respect to, into and/or inside of the hollow space. The releasable mechanism may be provided at the motor.

The hollow shaft may be oriented substantially vertical to an underwater ground or underwater surface or the underwater foundation. In other words, the hollow shaft or its central axis may be arranged substantially perpendicular to the underwater ground, surface or foundation.

The hollow shaft may extend or, in other words, be raised above water level. This enables functional operation of the mass with respect to the hollow shaft 6 above water or sea level. This adds further height of the hollow shaft above the underwater ground and thereby enables the system to store more energy.

Alternatively, or additionally, the hollow shaft may be laterally supported by a reinforcement structure. The reinforcement structure may be erected on the foundation. The reinforcement structure may be made from the same material as the foundation. The reinforcement structure provides lateral support for the hollow shaft such that it is protected from being damaged by environmental effects such as strong currents in the sea.

The motor may be configured to serve as the generator. In other words, the motor may have both capabilities, lifting the mass and generating energy when the mass is dropped or lowered.

The hollow shaft may further comprise at least one port for having water flow into and out of the hollow space. Also, the hollow shaft may comprise at least one flow regulating device for closing and opening the at least one port, thereby regulating water flow into and out of the hollow space. The at least one port may be located underwater.

The mass may further be functionally coupled to the hollow shaft such that when the motor is operated and the at least one port is open, water flows through the at least one port and into the hollow space for storage therein, (the water flowing into the hollow space) following the lifting of the mass.

The generator may be further configured to generate energy when the at least one port is opened and water stored in the hollow space flows through the at least one port and out of the hollow space.

Thereby, when the mass is dropped or lowered onto the water stored in the hollow shaft and the at least one port is open, the water will be pushed out of the hollow shaft through the at least one port and out into the sea by virtue of the pressure of the mass. The generator can thereby generate energy based on a rotation of the generator effected by a lowering or dropping of the mass. This may also be referred to as a discharge operation. In the discharge operation, electricity may be generated by the generator based on the water stored in the hollow shaft, which is stored as potential energy.

On the other hand, when the mass is pulled up or lifted by means of the motor, the water may flow into the hollow space and be stored therein, when the at least one port is open. This may also be referred to as a charging operation. In the charging operation, the water flows into the hollow space and raises in water level inside of the hollow space. The electrical energy provided by the wind turbine may thereby be converted into the potential energy and stored in the system. The potential energy may at a later stage be converted to electrical energy by carrying out the discharge operation as explained above.

The at least one port may be an inlet port for having water flow into the hollow space and an outlet port for having water flow out from the hollow space. Accordingly, different ports are used for water inflow and outflow.

The at least one flow regulating device may be an inlet valve of the inlet port and an outlet valve of the outlet port. Accordingly, the two ports may be separately opened and closed by means of regulating the separate valves.

The inlet port and the outlet port may be formed as conduits extending substantially opposite to one another or, in other words, in substantially opposite directions of each other. Thereby, one side of the hollow shaft may be used for the inlet port and an opposite side of the hollow shaft may be used for the outlet port. Also, the actual inlet openings and outlet openings of the ports may be positioned away from the hollow shaft by virtue of the conduits extending away from the hollow shaft. This may be advantageous with respect to the design of the hollow shaft, in particular when an optional lateral reinforcement structure is provided at the hollow shaft, as will be explained later.

A sea life barrier may be arranged at the inlet port. The sea life barrier is configured to prevent sea life from entering the hollow space. The sea life barrier may comprise a mesh structure. A mesh size or mesh sizes of the mesh structure may be designed sufficiently small that no or substantially no sea life, or at least little or no large species of sea life, can pass the mesh structure in order to get into the inlet port but water may at an acceptable flow rate pass through the mesh structure in order to be stored in the hollow space.

A flow barrier may be arranged at the outlet port. The flow barrier is configured to reduce the impact of the water flowing out of the outlet port onto the underwater ecosystem. This flow barrier may be provided in close proximity but at some distance from the outlet port. The flow barrier may be designed as a shield or wall and function by absorbing the impact of the water flow from the outlet port and dispersing the flow from the outlet port into the sea.

Also, the generator or, a further generator, may be located at the at least one port. It is also possible to provide a further generator to the one of the motor in the at least one port. In case that the system is provided with an inlet port and an outlet port, the generator may be be located at the outlet port. The generator may be a turbine. The generator thereby can produce energy from the water flowing out of the hollow space and through the outlet port.

The mass may be coupled to a piston inside of the hollow space. In a top portion extending out from the sea or water and above the sea or water level, the hollow shaft may be closed but for a piston rod of the piston, which passes through the top portion and may be sealed against the outside. The top portion of the hollow shaft may alternatively be open to allow the mass to enter the hollow shaft from top. A head of the piston may be slidably arranged within the hollow space and against the wall or side of the hollow shaft such that the piston may slide up when the mass is lifted and down when the mass is dropped. A head of the piston may be sealingly engaged or arranged with the inner wall or side of the hollow shaft. Thereby, it may be prevented that water can exit the hollow shaft to the top during the discharging process. At least one, a pair or multiple brake devices may be provided at the top portion of the hollow shaft for securing an end position of the piston in the hollow shaft at maximum state of charge of the system.

The system may also comprise a controller. The controller may be located at or near the motor, for example. The controller may be configured to perform a charging operation by
- controlling the at least one flow regulating device such that the at least one port opens,
- operating the motor and lifting the mass, thereby having water flow into the hollow space, and
- controlling the at least one flow regulating device such that the at least one port closes and the water flowed into the hollow space becomes stored therein,
The controller may further be configured to perform a discharging operation by
- controlling the at least one flow regulating device such that the at least one port opens, and
- dropping the mass, thereby having water stored in the hollow space flow out of the hollow space and operate the generator.

According to a second aspect of the invention, the initially stated object is solved by a wind farm comprising the underwater energy storage system according to the first aspect of the invention. The wind farm further comprises at least one wind turbine electrically connected to the motor and at least one grid station electrically connected to the motor.

Of course, the wind farm may comprise further wind turbines and grid stations electrically connected to the underwater energy storage. It is also possible to provide the wind farm with further underwater energy storage systems, for example with one system for each one or several of the wind turbines in the wind farm.

According to a third aspect of the invention, the initially stated object is solved by a method for operating the underwater energy storage system according to the first aspect of the invention or the wind farm according to the second aspect of the invention. The method comprises the following steps of a charging operation:
- controlling the at least one flow regulating device such that the at least one port opens,
- operating the motor and lifting the mass, thereby having water flow into the hollow space, and
- controlling the at least one flow regulating device such that the at least one port closes and the water flowed into the hollow space becomes stored therein,
The method further comprises the following steps of a discharging operation:
- controlling the at least one flow regulating device such that the at least one port opens, and
- releasing the mass, thereby having water stored in the hollow space flow out of the hollow space and operate the generator.

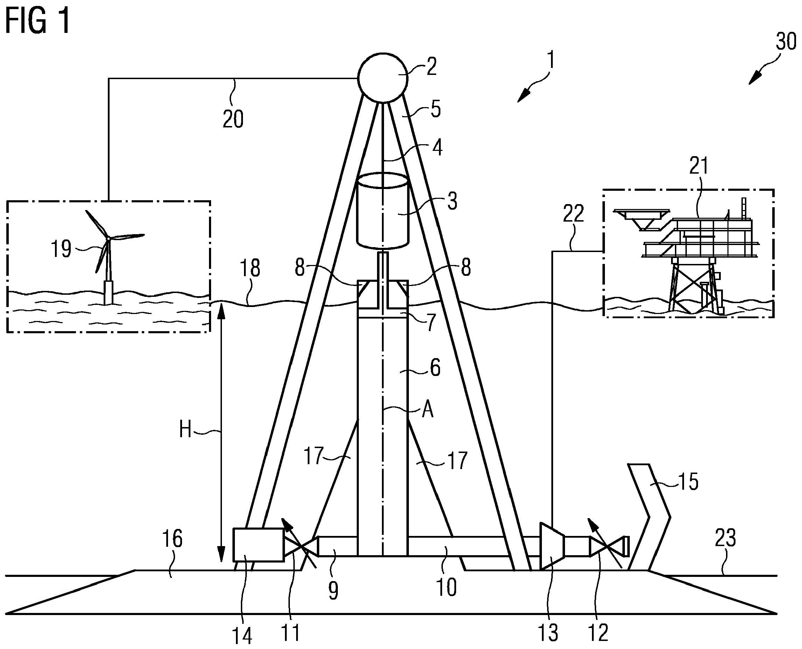

Further advantages, features and details of the invention unfold from the following description, in which by reference to drawings FIGS. 1 - 3, embodiments of the present invention are described in detail. Thereby, the features from the claims as well as the features mentioned in the description can be essential for the invention as taken alone or in an arbitrary combination. In the drawings, there is schematically shown:
- FIG. 1: a schematic illustration of a first embodiment of an underwater energy storage system according to the invention;
- FIG. 2: a schematic illustration of a second embodiment of an underwater energy storage system according to the invention; and
- FIG. 3: a schematic illustration of a method for operating the underwater energy storage system of FIG. 1.

Same objects in FIGS. 1 - 3 are denominated with the same reference number. The objects are shown in a schematic manner, and their specific dimensions are exemplary and may be enlarged for ease of reference only.

FIGURE 1 shows an underwater energy storage system 1 according to a first embodiment of the invention. The system 1 is located off-shore and disposed at a location of an off-shore wind farm 30. The system 1 is integrated into the wind farm 30.

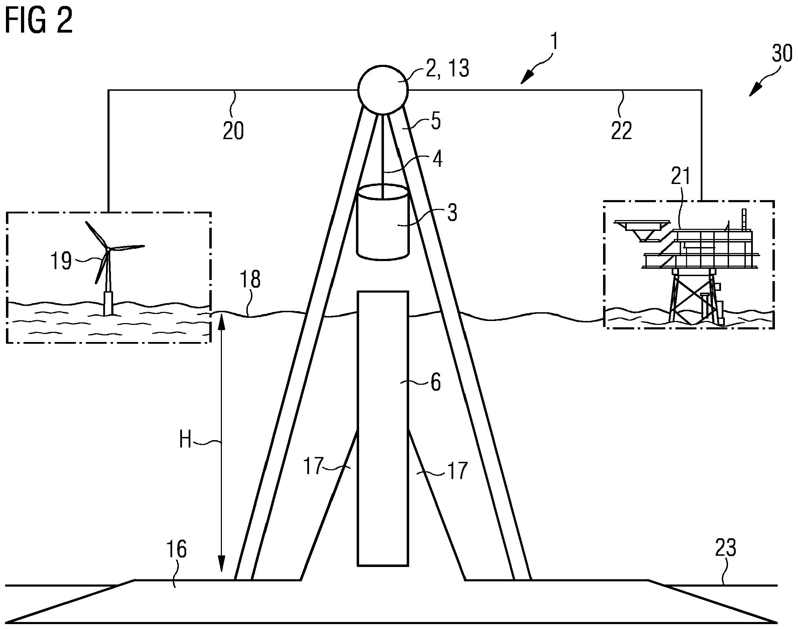

The wind farm 30 comprises a wind turbine 19 and a grid station 21. The wind turbine 19 and the grid station 21 are electrically connected by means of electrical connections 20, 22 to the system 1. Despite only one system 1, one wind turbine 19 and one grid station 21 being shown in FIG. 1, the actual number of any one of these elements may be higher. For example, it is possible to provide every one of multiple wind turbines 19 of a wind farm 30 with one or several underwater energy storage systems 1 as shown in FIG. 1 or FIG. 2, or provide one underwater energy storage system 1 for several wind turbines 19 and respectively connect them with each other and the grid station 21 or several grid stations 21.

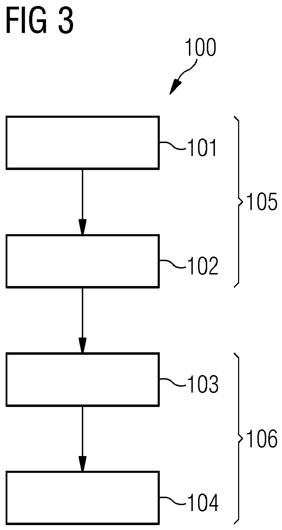

In the following, first, the structure of two embodiments of the system 1 will be explained with reference to FIGS. 1 and 2, and later a method 100 of operating the system 1 will be explained with reference to FIG. 3 in more detail. Both FIG. 1 and FIG. 2 show the system 1 with a nearly full state of charge, meaning that the systems 1 are nearly fully charged with potential energy.

The system 1 comprises a motor 2 and a mass 3 suspended by means of a suspension system 4 from the motor 2. The suspension system 4 may comprise one or more ropes or cables or other means for suspending the mass 3 from the motor 2. The motor 2 is an electrical motor and electrically coupled to the wind turbine 19 by means of an electrical connection 20.

The system 1 further comprises a supporting structure 5 supported on a foundation 16 on the ground 23 of the sea and supporting the motor 2 and the mass 3 attached thereto. Further, a releasable or decoupling mechanism (not shown), such as a mechanical clutch, is coupled between the mass 3 and the motor 2. Also, the system 1 comprises a piston 7 coupled to the mass 3.

The system 1 further comprises a hollow shaft 6 having a hollow space therein (the contour of the hollow shaft 6 is seen as the housing or wall of the hollow shaft 6 enclosing the hollow space therein). The hollow shaft 6 is supported on the foundation 16 located on the underwater ground 23 or surface of the sea. The foundation 16 may be made from concrete, for example. The hollow shaft 6 is also laterally supported by means of a reinforcement structure 17. The reinforcement structure 17 may be made from the same material as the foundation 16 and supported thereon or attached thereto, in particular integrally formed therewith. The hollow shaft 6 extends substantially perpendicular to the underwater ground 23 along its length or central axis (extending along its length). The hollow shaft 6 shares a central axis A with the mass 3.

In its top portion extending out from the sea and above the sea level 18, the hollow shaft 6 may be closed but for a piston rod of the piston 7, which passes through the top portion. It is alternatively possible to design the top portion of the hollow shaft 6 open such that the piston 7 passes through the hollow shaft 6 and the mass 3 may enter the hollow space inside of the hollow shaft 6 from top. It is also possible to enclose the mass 3 in the hollow shaft 6 and guide only the suspension system 4 through the top portion of the hollow shaft 6.

A head of the piston 7 is slidably arranged within the hollow space. The head of the piston 7 is also configured as a seal against the inside of the hollow shaft 6. Accordingly, water from inside of the hollow space is prevented from bypassing the piston head when the piston 7 is pushed down. At least one, a pair or multiple brake devices 8 are provided at the top portion for defining an end position of the piston 7, the end position being achieved at full state of charge of the system 1.

The hollow shaft 6 further has two ports 9, 10 extending as conduits substantially in opposite directions of one another. These ports 9, 10 are located in a bottom portion of the hollow shaft 6 opposite of the top portion and located underwater. One of the two ports 9, 10 is an inlet port 9 for having water flow into the hollow space of the hollow shaft 6, and the other one is an outlet port 10 for having water flow out of the hollow space. Each of the ports 9, 10 has a flow regulating device 11, 12 provided therein. The flow regulating devices 11, 12 may be in the form of an inlet valve 11 and an outlet valve 12.

At the inlet port 9, a sea life barrier 14 is provided. The sea life barrier 14 may be attached to the inlet port 9 or located at close proximity thereto, e.g., up to 10 meters from the inlet port 9 or up to 5 meters from the inlet port 9. The sea life barrier 14 is configured to prevent sea life from entering the hollow space when the water flows from the sea into the hollow space. The sea life barrier 14 for this purpose may comprise a mesh structure. The mesh sizes of the mesh structure may be designed sufficiently small that no or substantially no sea life, or at least no significant or no larger species of sea life, can pass the mesh structure in order to get into the inlet port 9 but water may at an acceptable flow rate pass through the mesh structure in order to be stored in the hollow space.

At the outlet port 10, a flow barrier 15 is arranged. This flow barrier 15 is provided in close proximity but at some distance from the outlet port 10, e.g., in the order of 5 to 100 meters, in particular in the order of 10 to 50 meters. The flow barrier 15 reduces an impact of the water stored in the hollow space flowing out of the outlet port 10 into the underwater ecosystem. It may be designed as one or multiple shields or walls, absorbing the impact of the water flowing out of the outlet port 10 and dispersing the flow into the sea.

In this first embodiment of FIG. 1, a generator 13 is provided in the outlet port 10. The generator 13 may be a turbine, for example. The generator 13 is electrically connected to the grid station 21 by means of the electrical connection 22.

The depth of the water of the sea measured from the foundation 16 to the sea level 18 is indicated as H. An upper part of the system 1 is located above the water or sea level 18. The upper part is the motor 2, an upper portion of the supporting structure 5 and an upper portion of the hollow shaft 6. Another part of the system 1 is located underwater or, in other words, under the water or sea level 18. These are the foundation 16, the reinforcement structure 5, a lower portion of the supporting structure 5, the ports 9, 10 with their valves 11, 12, the generator 13 and the sea life barrier 14 as well as the flow barrier 14.

The suspension system 4, the mass 3 and the piston 7 are moving parts as they are lifted or dropped towards the underwater or sea ground 23 by means of the motor 2 and releasable mechanism. Depending on the height of the hollow shaft 6 above sea level 18 and the charge of state, i.e., the height level or volume of water inside the hollow space, the positioning of the mass 3 or a portion thereof entering the hollow shaft 6, a portion of the suspension system 4 suspending the mass 3 inside of the hollow shaft 6 and the piston 7 may be above or below sea level 18.

FIGURE 2 shows an underwater energy storage system 1 according to a second embodiment of the invention. Despite the first embodiment being different from the second embodiment of the system 1 as explained below, the two embodiments represent only examples of the invention and the respective features of both embodiments mentioned herein may be combined with each other.

The second embodiment of the system 1 is different from the first embodiment in that the generator 13 is not located in an outlet port 10 of system 1 anymore but instead in the motor 2. In other words, the motor 2 is designed to serve the function of the motor 2 as well as the generator 13.

The second embodiment of the system 1 is further different from the first embodiment in that there is no piston 7 coupled to the mass 3. The mass 3 is allowed to enter the hollow shaft 6. The mass 3 may accordingly be lifted within the hollow shaft 6.

Further, there are no ports 9, 10 associated with the hollow shaft 6 of the system 1 of FIG. 2 but instead the hollow shaft 6 is filled with air and the operation of the system 1 is decoupled from the water inside the sea. Accordingly, there are also no ports 11, 12 in the system 1 of FIG. 2 and the sea life barrier 14 as well as the flow barrier 15 may be omitted as well.

The mass 3 of the system may also be dropped by means of the releasable mechanism disengaging it from the motor 2. The mass 3 is not sealingly engaged to the wall or housing of the hollow shaft 6 from inside such that the air inside the hollow shaft 6 may bypass the mass 3 during the discharging process.

While the first embodiment of the system 1 is with the hollow shaft 6 and the piston 7 therein forming a hydraulic accumulator, the second embodiment of the system 1 has the different approach of relying solely on the gravity of the mass 3. That is, in system 1 of FIG. 2, for the charging process, the mass 3 is raised by means of the motor 2 supplied with electrical energy from the wind turbine 19. In the discharging process of system 1 of FIG. 2, the mass 3 is dropped inside the hollow shaft 6 and the generator 13 is operated to generate and supply electrical energy to the grid station 21 based on the energy stored as potential energy by virtue of the elevation of the mass 3 above the sea ground 23 or ground of the hollow space inside the hollow shaft 6.

The energy amount that may be stored by the second embodiment of the system 1 particularly depends on the height to which the mass 3 may be lifted by the water in the hollow space. In general, besides the height, the energy content that may be stored in any of the embodiments of the system 1 further depends on the weight and shape of the mass 3, the size of the generator 13 and the flow through the valves 11, 12, for example. The hollow shaft 6 of the system 1 of the second embodiment may require a larger height than the hollow shaft 6 of the system 1 of the first embodiment for storing the same amount of energy. The system 1 according to the second embodiment is therefore particularly suitable for deep water, whereas the system 1 according to the first embodiment is particularly suitable for shallow water.

FIGURE 3 schematically shows a method 100 for operating the underwater energy storage system 1 according to the embodiment of FIG. 1.

A first step 101 of the method 100 for charging the system 1 comprises a production of electrical energy by means of the wind turbine 19 during a period, in which the energy shall not be distributed through the grid station 21 but stored as potential energy by the system 1 for later distribution into the grid by means of the grid station 21.

This electrical energy is transmitted from the wind turbine 19 via the electrical connection 20 to the motor 2 of the system 1. At this point, the hollow space may be empty such that the piston 7 is located at the bottom of the hollow shaft 6 or the hollow space may be partially filled with water to a certain height level of the hollow space such that the piston 7 is located somewhere in between the bottom portion and the top portion of the hollow shaft 6. In any case, for charging the system 1, it is required that some of the hollow space of the hollow shaft 6 is available for filling it with water from the sea.

Also, the inlet valve 11 is controlled to open the inlet port 9 towards the sea such that water from the sea may flow through the inlet port 9 into the hollow space. Due to the motor 2 being operated by means of the electrical energy supplied from the wind turbine 19, the mass 3 is lifted and thereby the piston 7 is lifted therewith.

A second step 102 is performed once the desired state of charge or full state of charge is reached in terms of capacity of the hollow space being filled by water or water level inside the hollow space. The motor 2 may be stopped at any time once the desired state of charge is reached and the mass 3 may then levitate in the hollow shaft 6. For the second step 102, the supply of electrical energy from the wind turbine 19 to the motor 2 is cancelled, and the motor 2 stops operating. Also, the inlet valve 11 is controlled to close the inlet port 9 against the sea. The charging operation 105 consisting from steps 101 and 102 is thereby terminated.

The potential energy stored in the system 1 by virtue of the water contained in the hollow space may at a later stage be converted by means of the generator 13 into electrical energy and supplied via the generator 13 to the grid station 21. This process is referred to as a discharging operation of the system 1 and may be started once the energy stored in the system 1 is required in the grid.

The discharging operation 106 starts with step 103 of the method after the step 102 is performed. In step 103, the releasable mechanism, in particular the mechanical clutch, is disengaged to release the mass 3 from the motor 2 such that the mass 3 may freely drop into and/or within the hollow shaft 6. The dropping mass 3 pushes the piston 7 with its head down towards the ground 23. The outlet valve 12 is controlled to open the outlet port 10 such that the water may exit the hollow space. The water flowing out from the hollow shaft 6 passes the generator 13 and causes it to rotate, thereby producing electrical energy. The electrical energy is forwarded to the grid station 21 by means of the electrical connection 22. The grid station 21 is connected with the grid and may distribute the electrical energy generated by the generator 13 to the grid. The impact of the water flowing out from the outlet port 10 on the environment is reduced by means of the flow barrier 15.

Once the requested amount of electrical energy has been produced by the generator 13 such that some potential energy is still left in the system 1, the releasable mechanism, in particular the mechanical clutch, may be engaged to keep the piston 7 at a desired water level within the hollow shaft 6. This may be performed in the step 104 of the method 100. Alternatively, the head of the piston 7 may drop to the bottom of the hollow space, thereby fully depleting the hollow space from water and potential energy. Further, in step 104, the outlet valve 12 is controlled to close the outlet port 10.

For the operation of the system 1 according to the second embodiment of FIG. 2, method 100 may be applied with the applicable differences between the systems 1, e.g., that the motor 2 generates the electrical energy, supplies it to the grid station 21 during the discharging operation and no valves 11, 12 are operated.

## Claims

1. Underwater energy storage system (1) for an off-shore wind turbine (19), the underwater energy storage system (1) comprising a hollow shaft (6), a generator (13), a motor (2) and a mass (3) attached to the motor (2), whereby
- the hollow shaft (6) is supported on a foundation (16) located underwater,
- wherein the hollow shaft (6) comprises a hollow space for storing water and/or air therein,
- the motor (2) is configured to lift the mass (3) relative to the foundation (16) by means of operating the motor (2),
- the mass (3) is functionally coupled to the hollow shaft (6) such that when the motor (2) is operated, the mass (3) is lifted, and
- the generator (13) is configured to generate energy when the mass (3) is dropped.

2. Underwater energy storage system (1) according to claim 1, whereby the mass (3) and the hollow shaft (6) share a common central axis (A) and/or the mass (3) is configured to move inside the hollow shaft (6) when the mass (3) is dropped.

3. Underwater energy storage system (1) according to claim 1 or 2, whereby the motor (2) is supported on a supporting structure (5), the supporting structure being supported on the foundation (16) and/or the hollow shaft (6) is laterally supported by a reinforcement structure (17).

4. Underwater energy storage system (1) according to any of the previous claims, whereby the mass (3) is suspended from the motor (2) and/or the mass (3) is coupled to the motor (2) by means of a releasable mechanism, in particular a mechanical clutch.

5. Underwater energy storage system (1) according to any of the previous claims, whereby the hollow shaft (6) is oriented substantially vertically to an underwater ground (23) and/or the hollow shaft (6) extends above water level (18).

6. Underwater energy storage system (1) according to any of the previous claims, whereby the motor (2) is configured to serve as the generator (13).

7. Underwater energy storage system (1) according to any of the previous claims, whereby the hollow shaft (6) comprises at least one port (9, 10) for having water flow into and out of the hollow space and at least one flow regulating device (11, 12) for closing and opening the at least one port (9, 10), thereby regulating water flow into and out of the hollow space, the at least one port (9, 10) being located underwater.

8. Underwater energy storage system (1) according to claim 7, whereby the mass (3) is functionally coupled to the hollow shaft (6) such that when the motor (2) is operated and the at least one port (9, 10) is open, water flows through the at least one port (9, 10) and into the hollow space for storage therein, following the lifting of the mass (3) and/or the generator (13) is configured to generate energy when the at least one port (9, 10) is opened and water stored in the hollow space flows through the at least one port (9, 10) and out of the hollow space.

9. Underwater energy storage system (1) according to claim 7 or 8, whereby the at least one port (9, 10) is an inlet port (9) for having water flow into the hollow space and an outlet port (10) for having water flow out from the hollow space and the at least one flow regulating device (11, 12) is an inlet valve (11) of the inlet port (9) and an outlet valve (12) of the outlet port (10).

10. Underwater energy storage system (1) according to claim 9, whereby a sea life barrier (14), in particular comprising a mesh structure, is arranged at the inlet port (9), the sea life barrier (14) being configured to prevent sea life from entering the hollow space.

11. Underwater energy storage system (1) according to claim 9 or 10, whereby a flow barrier (15) is arranged at the outlet port (10), the flow barrier (15) being configured to reduce the impact of the water flowing out of the outlet port (10) onto the underwater ecosystem.

12. Underwater energy storage system (1) according to any of claims 7 to 11, whereby the generator (13) is located at the at least one port (9, 10).

13. Underwater energy storage system (1) according to any of claims 7 to 12, whereby the mass (13) is coupled to a piston (7) inside of the hollow space.

14. Wind farm (30) comprising an underwater energy storage system (1) according to any of the previous claims, whereby the wind farm (30) further comprises at least one wind turbine (19) electrically connected to the motor (2) and at least one grid station (21) electrically connected to the generator (13).

15. Method (100) for operating the underwater energy storage system (1) according to any of claims 8 to 13, whereby the method (100) comprises the following steps of a charging operation:
- controlling the at least one flow regulating device (11, 12) such that the at least one port (9, 10) opens,
- operating the motor (2) and lifting the mass (3), thereby having water flow into the hollow space, and
- controlling the at least one flow regulating device (11, 12) such that the at least one port (9, 10) closes and the water flowed into the hollow space becomes stored therein,
and whereby the method (100) comprises the following steps of a discharging operation:
- controlling the at least one flow regulating device (11, 12) such that the at least one port (9, 10) opens, and
- releasing the mass (3), thereby having water stored in the hollow space flow out of the hollow space and operate the generator (13).
